# EUROPEAN PATENT SPECIFICATION

(11) **EP 2 469 135 B1**
(45) Date of publication and mention of the grant of the patent: **09.10.2013**
(21) Application number: 11195084.6
(22) Date of filing: 22.12.2011
(51) Int. Cl.: F16K 3/02

(54) **Guillotine damper and duct arrangement**
Absperrschieber und Rohranordnung
Vanne guillotine avec agencement de conduit

(30) Priority: 22.12.2010 FI 20106366
(43) Date of publication of application: 27.06.2012
(73) Proprietor: Sammet Dampers OY, 40950 Muurame (FI)
(72) Inventor: Junkkarinen, Pekka, 41330 Vihtavuori (FI)
(74) Representative: Helke, Kimmo Kalervo

(56) References cited:
- WO-A1-93/00536
- DE-A1- 2 355 781
- US-A- 4 491 144

## Description

The present invention relates to a guillotine damper, which is intended to be used as a duct component in order to close a duct, and which includes
- a perimeter frame structure,
- a blade arranged to move inside the frame structure and to close the guillotine damper, and
- a feed-through for the blade, arranged in the frame structure, and
- sealing means arranged in connection with the feed-through, which include a plaited packing and press means for pressing the plaited packing, and the sealing means further include loading elements, which are arranged to press the plaited packing against the blade.

The invention also relates to a duct arrangement.

Various types of shut-off and regulating dampers are used as duct components in industry. Particularly when installed in a flue-gas duct, a damper is subject to extreme temperatures and high pressure. In addition, flue gases are generally corrosive and contain impurities and substances that bind moisture. In guillotine dampers, there is a blade moving in a frame structure, so that a guillotine damper requires little installation space in the flow direction of the duct. There is a feed-through in the frame structure for the blade, as well as sealing means to seal the feed-through. The sealing means includes press means, by means of which the plaited packing is compressed.

However, in known guillotine dampers there are several drawbacks. One problem is the sealing of the feed-through. The blade, which is usually manufactured from thick steel plate, is heavy. Despite the great material thickness, the blade deflects, which causes problems in the sealing. In addition to the blade's own mass, deflections are caused by the pressure and heat in the duct. The plaited packing in general use has good durability, but poor resilience. In addition, the massive structures demand tolerances, so that deformations in the blade and also the frame structure will cause leakage gaps. Flow routes are then opened from inside the duct, from which flue gases spread into the surroundings of the duct. Problems have also appeared in the sealing means themselves, which weaken the sealing of the feed-through and make installation and maintenance of the sealing means difficult.

DE 2355781 A1 discloses a guillotine damper according to the preamble of Claim 1.

The invention is intended to create a new type of guillotine damper, which is better sealed than previously and by means of which the drawbacks of the prior art can be eliminated. The invention is also intended to create a new type of duct arrangement, by means of which detrimental leaks from the duct to its surroundings can be eliminated. The characteristic features of the guillotine damper according to the invention are stated in the accompanying Claim 1. Correspondingly, the characteristic features of the duct arrangement according to the invention are stated in the accompanying Claim 14. In the guillotine damper according to the invention, there are a new type of sealing means, by means of which the creation of leakage gaps can be effectively prevented. Thus, it is possible to effectively prevent leaks. The construction of the sealing means is simple and conventional plaited packing can still be used. On the other hand, the construction of the sealing means can be easily altered and the installation and maintenance of the sealing means is easy. In addition, the sealing means adapt to the frame structure and the shapes of the blade and the seal can even be adjusted locally. Thus, the gas-tightness of the duct arrangement can be easily optimized.

In the following, the invention is described in detail with reference to the accompanying drawings, depicting embodiments of the invention, in which
- Figure 1: shows a guillotine damper partly closed and fitted as part of a duct,
- Figure 2: shows the guillotine damper of Figure 1 without one of the side beams of the frame structure,
- Figure 3: shows the guillotine damper according to the invention, seen from the end of the transverse beam of the feed-through arrangement of the blade,
- Figure 4: shows an angled view from above of the feed-through arrangement of Figure 3 and with part of the sealing means removed,
- Figure 5: shows the feed-through arrangement of Figure 4 with even more parts removed,
- Figure 6a: shows a first embodiment of the plate structure according to the invention,
- Figure 6b: shows a second embodiment of the plate structure according to the invention, and
- Figure 6c: shows a third embodiment of the plate structure according to the invention.

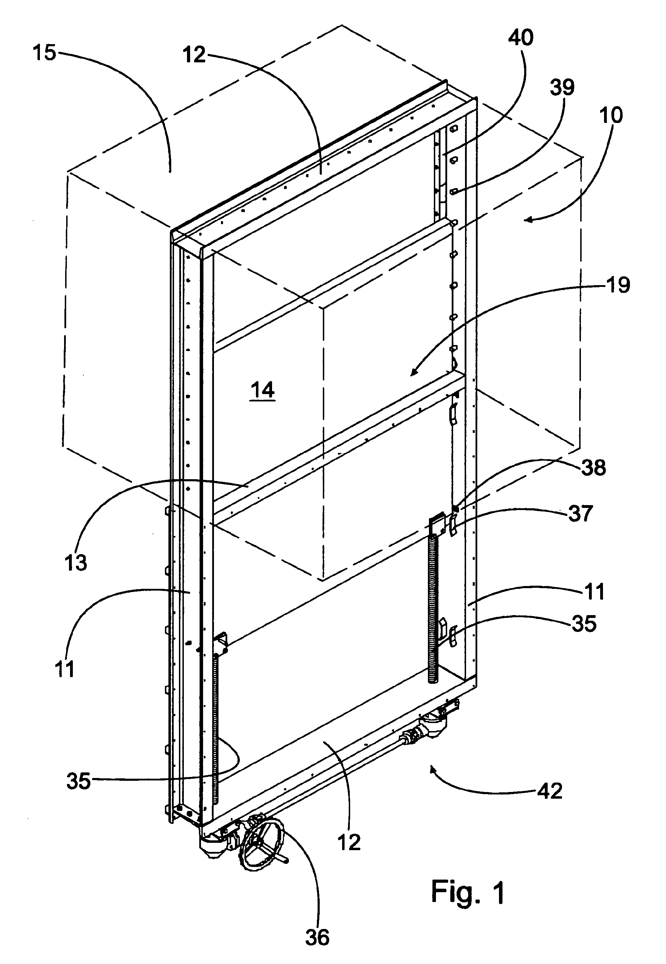

Figure 1 shows a duct arrangement, in which there is a guillotine damper. The guillotine damper is used as a duct component to close a duct 15, such as a flue-gas duct. In other words, the guillotine damper is usually either entirely open or entirely closed, however, generally open. In Figure 1, the duct 15 is shown by broken lines. In this case, the guillotine damper is vertical, i.e. installed in a horizontal duct, in which case the deflection caused by the blade's own mass is avoided. Duct arrangements also exist, in which the guillotine damper is horizontal, i.e. installed in a vertical duct (not shown). Irrespective of the installation position, significant forces act on the blade, if the guillotine blade is used as a regulating damper, when the blade is used to throttle the flow in the duct. The guillotine damper will then be partly open, according to Figure 1.

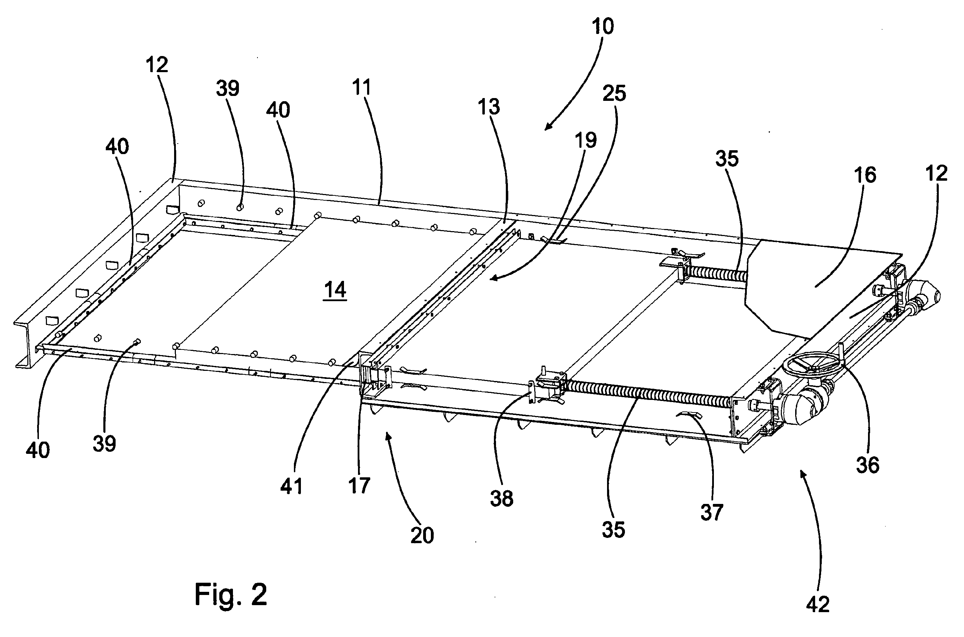

The guillotine damper includes a perimeter frame structure 10, which in this case includes two side beams 11 and two end beams 12, as well as one transverse beam 13. The opposite side of the transverse beam 13 to the duct is covered on both side by cover plates. The cover plate 16 is only partly shown in Figure 2. In the open position of the guillotine damper, the blade 14 is then entirely inside the frame structure and the duct is fully open (not shown). For circular ducts, the frame structure comprises a semicircularly shaped portion, in which case the blade also includes a corresponding semicircular portion. Depending on the application and the installation space, the guillotine damper can be installed in different positions. In order to ensure the smooth movement of the blade, the frame structure is generally installed in a vertical position, so that the movement of the blade is in the direction of gravity. Irrespective of the installation orientation, the guillotine damper requires an installation gap in the flow direction of the duct, which is only as much as the thickness of the frame structure. In industrial use, the thickness of the frame structure is of some hundreds of millimetres, the duct size being in the order of 1500 * 2000 mm.

The guillotine damper is thus intended to be used as a duct component in order to close a duct, either entirely or partly. The guillotine damper includes a perimeter frame structure 10, inside which is a blade 14 arranged to move and a to close the guillotine damper. A feed-through 19 for the blade 14 is also arranged in the frame structure 10, as well as sealing means 20, which include a plaited packing 17, in connection with the feed-through 19. The sealing means 20 also include press means 22', for compressing the plaited packing 17. According to the invention, the sealing means 20 further include loading elements 18, which are arranged to press the plaited packing 17 against the blade 14. Thus, the contact between the blade and the plaited packing is retained continuously, so that the formation of leakage gaps is avoided. The contact remains, even though the resilience of the plaited packing is poor, as the loading elements permit the plaited packing to move while the press means hold the plaited packing sufficiently tightly to ensure a gas-tight seal. In practice, the gas-tightness formed by the plaited packing and the loading elements conforms to the deformations of the various structures, without excess friction. The plaited packing is formed of one or several seal plaits. The choice of the plaited packing and its material is influenced mainly by the temperature and chemical conditions. The basic component of the plaited packing is a base wire, from which a plait is formed. Generally, the plait is filled with an impregnation and lubrication agent, for example, Teflon and graphite.

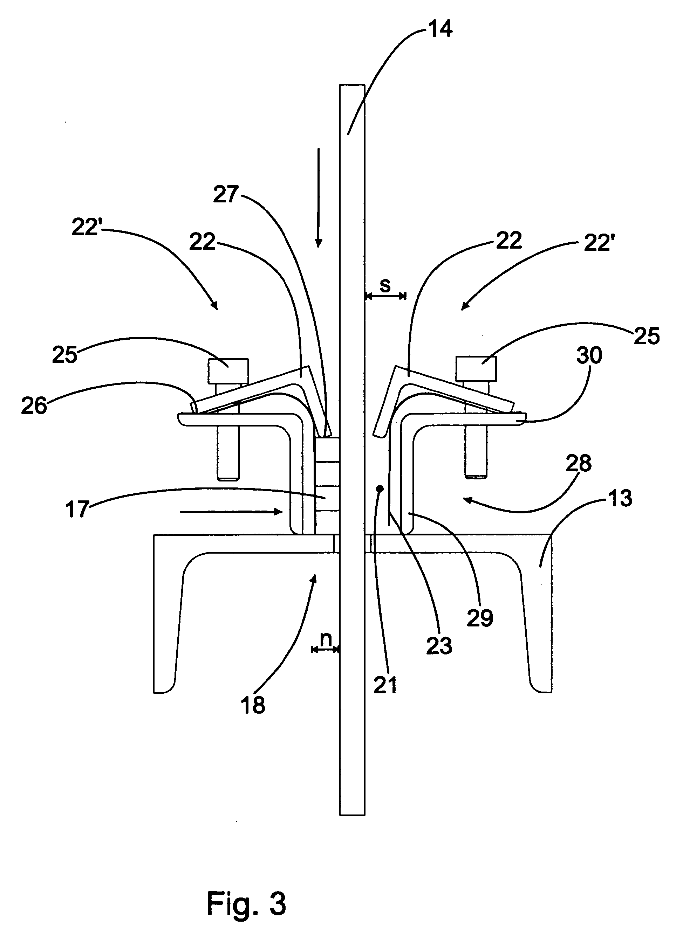

Figure 3 shows in greater detail the transverse beam 13 and the sealing means 20 arranged in it. In a manner that is, as such, known, the feed-through 19 includes a seal housing 21. According to the invention, the width s of the seal housing is clearly greater than the nominal dimension n of the plaited packing 17. In addition, the loading elements 18 according to the invention are arranged to extend between the seal housing 21 and the plaited packing 17. Thus, the plaited packing presses against the blade 14 over the entire distance. In this case, the press means 22' belonging to the sealing means 20 are formed of a press profile 22 for pressing the plaited packing 17 against the bottom of the seal housing 21. The plaited packing is then pressed from two directions that are essentially at right angles to each other, thus creating a good and delicately adaptable seal. In Figure 3, the pressure directions are shown by two arrows. The force created by the press means is essentially parallel to the blade. Correspondingly, the force created by the loading means is essentially perpendicular to the surface of the blade. Deformations of the seal housing or the blade, as well as movements between the seal housing and the blade, no longer cause leakage gaps, instead the plaited packing always remains against the blade. The size of the duct component is very important in the dimensioning of the seal housing. As is known, the seal housing must be dimensioned with a small tolerance, to that the seal plait can be installed, but the plaited packing is supported by the seal housing when it expands under pressure. Thus, by using a clearly larger seal housing the loading elements can be placed between the seal housing and the plaited packing. At the same time, the plaited packing gets its support from the loading elements, instead of from the seal housing. The width s of the seal housing can be, for example, one-and-a-half times the nominal dimension n of the plaited packing. The seal housing, which is wider than previously, also facilitates the installation of the plaited packing. Nevertheless, compared to the prior art the seal housing needs to be enlarged only slightly and the seal housing will still fit between the flanges of the transverse beam. It may also be possible for the loading elements to fit into existing seal housings, so that the sealing of the feed-through can be improved simply. In Figure 3, the right-hand seal housing is slightly larger than the left-hand one. This has been used to test the operation of the loading elements.

The loading elements can be implemented in various ways, but, according to the invention, the loading elements 18 are formed of a spring-steel plate structure 23, which extends essentially over the entire distance of the feed-through. The plate structure demands little space and, suitably supported, a significant pressure against the blade is created in the plaited packing. By extending essentially over the entire distance of the feed-through, the plate structure presses the plaited packing over the entire distance, so that the sealing is good over the entire width of the blade. The blade structure also fits well into the seal housing, as the thickness of the spring steel is 0,1 - 0,5 mm, preferably 0,25 - 0,4 mm. A sufficient force can be achieved with even a surprisingly thin plate structure. The creation of the force is also affected by the support of the plate structure. In the embodiment described, the spring-steel plate structure is supported in such a way that its bending is more than 90°. In the figure, the bending is about 110°. In general, the bending is 90 - 130°, preferably 100 - 120°. This ensures that the plate structure will be tensioned throughout and the compression force will remain essentially the same over the entire operating distance of the loading elements. In practice, the blade can press against the seal housing of the plaited packing, so that the compression force of the loading elements will have no effect. When the location of the blade changes later, the loading elements will return the plaited packing and press it constantly against the blade. Stainless spring steel will withstand both heat and corrosive conditions.

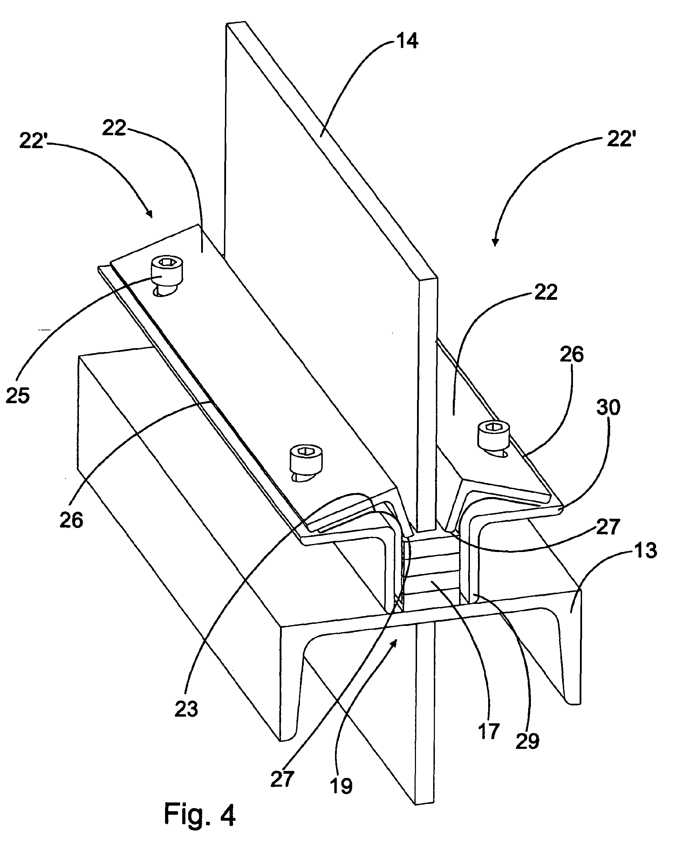

Figure 4 shows only a short length of the feed-through. In practice, the plate structure 23 can be formed of several plate pieces 24, which are set end-to-end to form extensions of each other. This facilitates particularly installation, as it is possible to use plate pieces that are shorter than the width of the blade. At the same time, intermediate supports can be used to support the blade. In the plate structure, there is thus a discontinuity point at the location of the intermediate support. According to the embodiment shown, the plate structure 23 is fitted between the press profile 22 and the seal housing 21. Thus, the plate structure is protected under the press profile and cannot rise out of the seal housing, even if the blade moves. In addition to the above, the plate structure 23 is attached by means of attachment elements 18 belonging to the press profile 22. Thus, the plate structure is secured when the press profiles are attached. In this case, the attachment elements 18 are socket-cap bolts 25, so that the press profile can be tightened steplessly. In practice, the manufacture of the seal is commenced by installing the plaited packing. Once the plaited packing is in place, the straight spring-steel plate structure is fed between the seal housing and the plaited packing. Alternatively, the plate structure is set into the seal housing before the installation of the plaited packing. After this, the plate structure is bent and the press profile is set in place. Finally, the attachment elements are used to attach both the press profile and the plate structure and the plaited packing is pressed against the bottom of the seal housing by tightening the press profile.

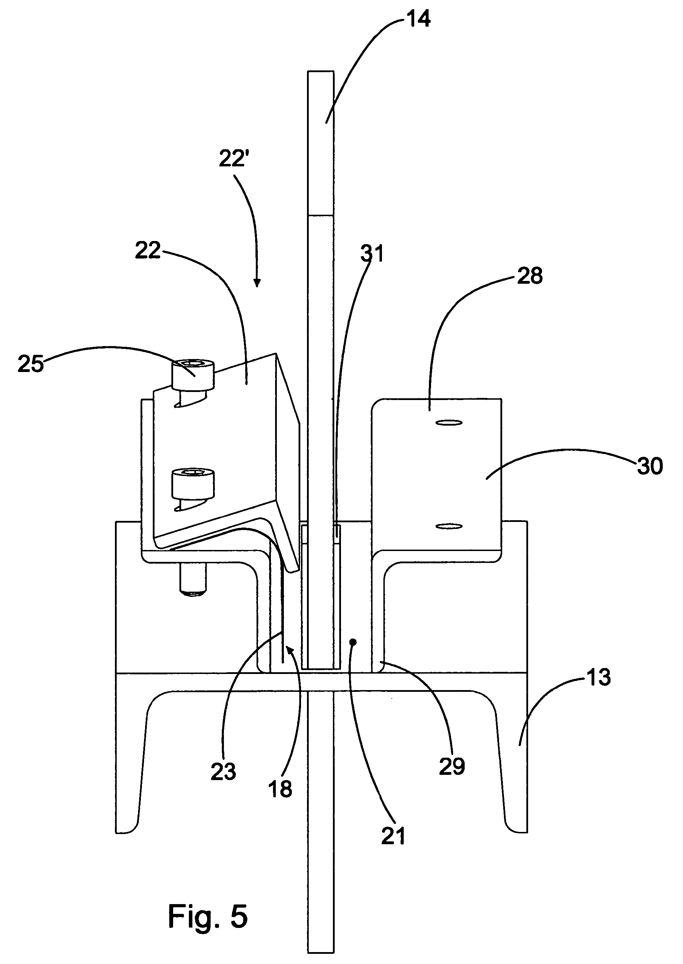

In addition to the new and surprising loading element, the use of a press profile is novel. According to the invention, the press profile 22 includes two edges 26 and 27, the first edge 26 of which is arranged against the frame structure 10, the second edge 27 being against the plaited packing. In addition, there is rounding in the said first edge 26. The movement of the press profile will then be smooth, without a sharp linear contact with the plate piece. In the embodiment described, the frame structure is angle irons 28 forming the seal housing, which are welded to the transverse beam 13. One flange 29 of the angle iron 28 then forms the wall of the seal housing. Correspondingly, the other flange 30 of the angle iron 28 forms a support surface for the press profile. In practice, the press profile is then supported over its entire length on the frame structure. A press perimeter according to the prior art deflected detrimentally when it was tightened. This deflection is now avoided by means of the press profile according to the invention. In addition, a known press perimeter must be manufactured as a total component, whereas in the invention it is possible to use several separate press profiles, set end-to-end as continuations of each other. Figure 2 shows a press perimeter according to the prior art. The use of a press profile that is shorter than the width of the blade also permits the use of the aforementioned intermediate supports. At the same time, the compressive force of the plaited packing can be set to be different at different locations. For example, a greater compressive force can be used at the edge parts compared to the central parts, in order to ensure gas-tightness. Figure 5 shows the feed-through 19, which is an opening 31 formed in the transverse beam 13. The size of the opening is slightly greater than the dimensions of the blade.

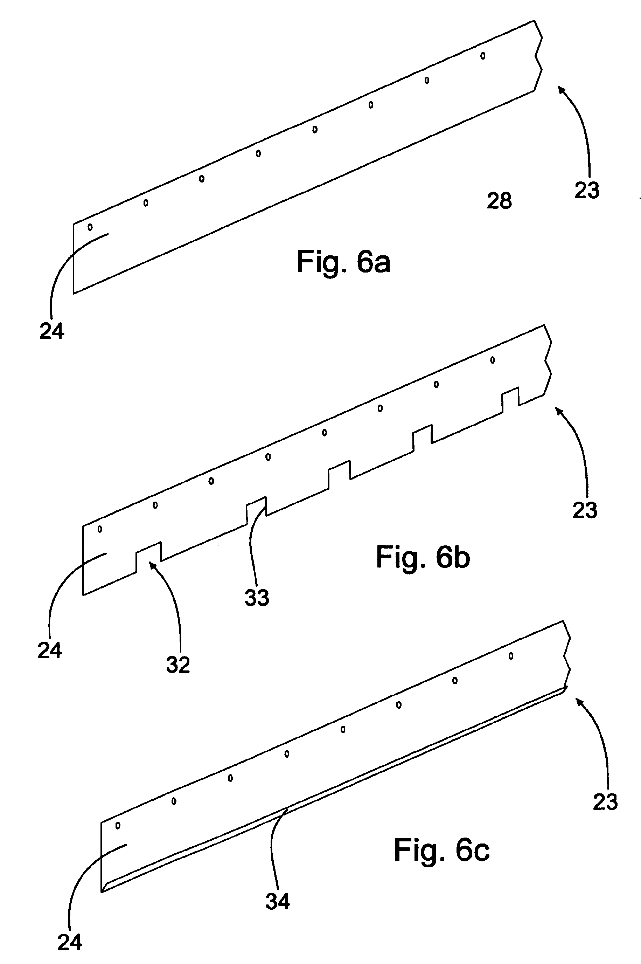

At its simplest, the plate structure 23 is a flat-sided band, in which there are holes for the attachment elements (Figure 6a). The band can be stored and transported when rolled up. Figure 6b shows a second embodiment of the plate structure, in which, on the seal-housing side of the plate structure 23, there is lightening shaping 32 in order to adjust the flexing properties of the plate structure 23. In this case, the lightening shapes are slots 33. Lightening shaping can be used to tune the loading elements. The profiling of the flexing properties is thus also possible by arranging the dimensioning of the slots to be different at different locations. Figure 6c shows a third embodiment of the plate structure. In this case, there is a bent portion 34 in the seal-housing side of the plate structure 23, in order to adjust the flexing properties of the plate structure 23. Thanks to the bend, the loading of the plate structure is particularly directed to the start of the plaited packing. The bent portion is intended to lie against the plaited packing. The lightening shaping and bending can also be fitted to the same plate structure. The thin plate structure can be easily shaped, for example, by laser-cutting. In Figures 3 and 4, there are four plaited packings on top of each other and the plaited packings run around the blade (Figure 4).

The guillotine damper also includes means 42 for moving the blade 14. In Figure 2, the blade 14 has a honeycomb structure, so that the blade is light but rigid. Lightness is achieved by using thin plate material and laser-cutting and welding can be utilized in the manufacture of the blade. In the embodiment of Figure 2, the blade is moved by two drive screws 35, which are fitted inside the blade 14. Both of the drive screws are operated simultaneously by a handwheel 36. In this case, one side beam 11 of the guillotine damper has been removed. In both side beams 11, there are three blade guides 37, as well as two slide pieces 38, so that the blade 14 will remain in the correct position and friction forces will be as small as possible. At the location of the duct, there are guide pines 39 in the side beams 11, which interfere with the gas flow as little as possible. In this case, the actual sealing of the guillotine damper is implemented by means of spring-steel bubbles 40, which conform to and seal the surface of the blade 14. In the open position, the blade goes directly inside the protection of the frame structure through the transverse beam, remaining, however, between the plaited packing. In connection with the feed-through 19, there is also a flexible plate 41, which is arranged to close the feed-through 19 when the guillotine damper is in the open position. When the guillotine damper is closed, the blade protruding from inside the frame structure bends the aforementioned plate. When the guillotine damper opens again, the plate returns to its closed position.

By means of the guillotine damper according to the invention, the duct arrangement is made especially gas-tight. Detrimental leaks are then avoided when using even a simple plaited packing. The gas-tightness is retained despite deformations and larger tolerances than usual can be used. The manufacturing costs are then reduced and the jamming of the blade can be avoided. The sealing properties can also be adjusted and the adjustment can be profiled. It is also possible to improve an existing seal.

## Claims

1. Guillotine damper, which is intended to be used as a duct component in order to close a duct (15), and which includes
- a perimeter frame structure (10),
- a blade (14) arranged to move inside the frame structure (10) and to close the guillotine damper, and
- a feed-through (19) for the blade (14), arranged in the frame structure (10), and
- sealing means (20) arranged in connection with the feed-through (19), which include a plaited packing (17) and press means (22') for pressing the plaited packing (17), and the sealing means (20) further include loading elements (18), which are arranged to press the plaited packing (17) against the blade (14),
**characterized in that** the loading elements (18) are formed of a spring-steel plate structure (23), which extends essentially over the entire distance of the feed-through (19).

2. Guillotine damper according to Claim 1, **characterized in that** the feed-through (19) includes seal housing (21), the width s of which is clearly greater than the nominal dimension n of the plaited packing (17), and the loading elements (18) are arranged to extend between the seal housing (21) and the plaited packing (17).

3. Guillotine damper according to Claim 1 or 2, **characterized in that** thickness of the spring steel is 0,1 - 0,5 mm, preferably 0,25 - 0,4 mm.

4. Guillotine damper according to any of Claims 1 - 3, **characterized in that** the plate structure (23) is formed from several plate pieces (24), which are set end-to-end as continuations of each other.

5. Guillotine damper according to any of Claims 1 - 4, **characterized in that** there is lightening shaping (32) on the seal-housing (21) side of the plate structure (23), in order to adjust the flexing properties of the plate structure (23).

6. Guillotine damper according to any of Claims 1 - 5, **characterized in that** there is a bent portion (34) in the seal-housing side (21) of the plate structure (23), in order to adjust the flexing properties of the plate structure (23).

7. Guillotine damper according to any of Claims 1 - 6, **characterized in that** the press means (22') are formed of a press profile (22), and the plate structure (23) is fitted between the press profile (22) and the seal housing (21).

8. Guillotine damper according to Claim 7, **characterized in that** the plate structure (23) is attached by means of attachment elements (18) belonging to the press profile (22).

9. Guillotine damper according to Claim 7 or 8, **characterized in that** the press profile (22) includes two edges (26, 27), of which the first edge (26) is arranged against the frame structure (10), the second edge (27) being against the plaited packing (17).

10. Guillotine damper according to Claim 9, **characterized in that** there is a rounding in the first edge (26).

11. Guillotine damper according to any of Claims 7 - 10, **characterized in that** several separate press profiles (22) are set end-to-end as continuations of each other.

12. Guillotine damper according to Claim 11, **characterized in that** the separate press profiles (22) are arranged at different tension, in order to set the force pressing on the plaited packing (17) to be different at different locations.

13. Guillotine damper according to any of Claims 1 - 12, **characterized in that** the spring-steel plate structure (23) is supported in such a way that its bending is more than 90°.

14. Duct arrangement, in which a guillotine damper is fitted to the duct (15) to form a duct component in order to close the duct (15), **characterized in that** the guillotine damper is a guillotine damper according to any of Claims 1 - 13.

## Patentansprüche

1. Als Rohrleitungskomponente zum Absperren einer Rohrleitung (15) bestimmter Absperrschieber, welcher umfasst:
- eine umfangartige Rahmenkonstruktion (10),
- eine in der Rahmenkonstruktion (10) beweglich angeordnete und zum Schließen des Absperrschiebers eingerichtete Scheibe (14),
- eine an der Rahmenkonstruktion (10) ausgebildete Durchführung (19) für die Scheibe (14), und
- an der Durchführung (19) angeordnete Dichtungsmittel (20), zu denen eine Geflechtdichtung (17) und Pressmittel (22') zum Pressen der Geflechtdichtung (17) und weiter Belastungselemente (18), die dazu eingerichtet sind, die Geflechtdichtung (17) gegen die Scheibe (14) zu drücken, gehören,
**dadurch gekennzeichnet, dass** die Belastungselemente (18) von einer Blechkonstruktion (23) aus Federstahl, die sich wesentlich über die gesamte Distanz der Durchführung (19) erstreckt, gebildet werden.

2. Absperrschieber nach Anspruch 1, **dadurch gekennzeichnet, dass** zu der Durchführung (19) ein Dichtungsgehäuse (21) gehört, dessen Breite s deutlich größer als das Nennmaß n der Geflechtdichtung (17) ist, und die Belastungselemente (18) so ausgelegt sind, dass sie sich zwischen das Dichtungsgehäuse (21) und die Geflechtdichtung (17) erstrecken.

3. Absperrschieber nach Anspruch 1 oder 2, **dadurch gekennzeichnet dass** die Dicke des Federstahls 0,1 - 0,5 mm, bevorzugter 0,25 - 0,4 mm beträgt.

4. Absperrschieber nach irgendeinem der Ansprüche 1 bis 3, **dadurch gekennzeichnet, dass** die Blechkonstruktion (23) aus mehreren Blechteilen (24) besteht, die durch Stoßverbindung gegenseitig verlängert sind.

5. Absperrschieber nach irgendeinem der Ansprüche 1 bis 4, **dadurch gekennzeichnet, dass** am dem Dichtungsgehäuse (21) zugewandten Rand der Blechkonstruktion (23) eine gewichtsreduzierende Aussparung (32) zur Regulierung der elastischen Eigenschaften der Blechkonstruktion (23) ausgebildet ist.

6. Absperrschieber nach irgendeinem der Ansprüche 1 bis 5, **dadurch gekennzeichnet, dass** am dem Dichtungsgehäuse (21) zugewandten Rand der Blechkonstruktion (23) ein aufgebogener Abschnitt (34) zur Regulierung der elastischen Eigenschaften der Blechkonstruktion (23) ausgebildet ist.

7. Absperrschieber nach irgendeinem der Ansprüche 1 bis 6, **dadurch gekennzeichnet, dass** die Pressmittel (22') aus einem Pressprofil (22) bestehen und die Blechkonstruktion (23) zwischen dem Pressprofil (22) und dem Dichtungsgehäuse (21) angeordnet ist.

8. Absperrschieber nach Anspruch 7, **dadurch gekennzeichnet, dass** die Blechkonstruktion (23) mit zu dem Pressprofil (22) gehörenden Befestigungselementen (18) befestigt ist.

9. Absperrschieber nach Anspruch 7 oder 8, **dadurch gekennzeichnet, dass** das Pressprofil (22) zwei Kanten (26, 27) aufweist, von denen die erste Kante (26) an der Rahmenkonstruktion (10) und die zweite Kante (27) an der Geflechtdichtung (17) anliegt.

10. Absperrschieber nach Anspruch 9, **dadurch gekennzeichnet, dass** die erste Kante (26) gerundet ist.

11. Absperrschieber nach irgendeinem der Ansprüche 7 bis 10, **dadurch gekennzeichnet, dass** mehrere separate Pressprofile (22) mit ihren Enden durch Stoßverbindung aneinandergefügt sind.

12. Absperrschieber nach Anspruch 11, **dadurch gekennzeichnet, dass** die separaten Pressprofile (22) unter verschiedene Spannung gesetzt sind um die auf die Geflechtdichtung (17) wirkende Kraft von Stelle zu Stelle verschieden zu gestalten.

13. Absperrschieber nach irgendeinem der Ansprüche 1 bis 12, **dadurch gekennzeichnet, dass** die aus Federstahl bestehende Blechkonstruktion (23) so abgestützt ist, dass ihre Biegung über 90° beträgt.

14. Rohranordnung, in der zum Absperren der Rohrleitung (15) in das Rohr (15) als Rohrleitungskomponente ein Absperrschieber eingefügt ist, **dadurch gekennzeichnet, dass** der Absperrschieber ein Absperrschieber nach irgendeinem der Ansprüche 1 bis 13 ist.

## Revendications

1. Vanne guillotine, qui est destinée à être utilisée en tant que composant de conduit pour fermer un conduit (15), et qui comprend
- une structure de cadre périmétrique (10),
- une pale (14) disposée de sorte à se déplacer à l'intérieur de la structure de cadre (10) et à fermer la vanne guillotine,
- une ouverture (19) pour la pale (14) disposée dans la structure de cadre (10), et
- des moyens d'étanchéité (20) disposés en liaison avec l'ouverture (19), qui comprennent une garniture tressée (17) et des moyens de pression (22') pour presser la garniture tressée (17), et les moyens d'étanchéité (20) comprennent en outre des éléments de charge (18), qui sont disposés de sorte à appuyer la garniture tressée (17) contre la pale (14),
**caractérisée en ce que** les éléments de charge (18) sont formés d'une structure en plaques en acier à ressort (23), qui s'étend essentiellement sur toute la distance de l'ouverture (19).

2. Vanne guillotine selon la revendication 1, **caractérisée en ce que** l'ouverture (19) comprend un boîtier d'étanchéité (21), dont la largeur s est essentiellement supérieure à la dimension nominale n de la garniture tressée (17), et les éléments de charge (18) sont disposés de sorte à s'étendre entre la boîtier d'étanchéité (21) et la garniture tressée (17).

3. Vanne guillotine selon la revendication 1 ou 2, **caractérisée en ce que** l'épaisseur de l'acier à ressort est de 0,1 à 0,5 mm, de préférence de 0,25 à 0,4 mm.

4. Vanne guillotine selon l'une quelconque des revendications 1 à 3, **caractérisée en ce que** la structure en plaques (23) se compose de plusieurs pièces de plaque (24), qui sont placées bout à bout les unes dans le prolongement des autres.

5. Vanne guillotine selon l'une quelconque des revendications 1 à 4, **caractérisée en ce qu'**il y a un façonnage d'allègement (32) sur le côté du boîtier d'étanchéité (21) de la structure en plaques (23) pour ajuster les propriétés de flexion de la structure en plaques (23).

6. Vanne guillotine selon l'une quelconque des revendications 1 à 5, **caractérisée en ce qu'**il y a une partie pliée (34) sur le côté du boîtier d'étanchéité (21) de la structure en plaques (23) pour ajuster les propriétés de flexion de la structure en plaques (23).

7. Vanne guillotine selon l'une quelconque des revendications 1 à 6, **caractérisée en ce que** les moyens de pression (22') se composent d'un profilé de pression (22), et la structure en plaques (23) est installée entre le profilé de pression (22) et le boîtier d'étanchéité (21).

8. Vanne guillotine selon la revendication 7, **caractérisée en ce que** la structure en plaques (23) est attachée à l'aide d'éléments de fixation (18) faisant partie du profilé de pression (22).

9. Vanne guillotine selon la revendication 7 ou 8, **caractérisée en ce que** le profilé de pression (22) comprend deux bords (26, 27), dont le premier bord (26) est disposé contre la structure de cadre (10), le deuxième bord (27) étant contre la garniture tressée (17).

10. Vanne guillotine selon la revendication 9, **caractérisée en ce qu'**il y a un arrondi sur le premier bord (26).

11. Vanne guillotine selon l'une quelconque des revendications 7 à 10, **caractérisée en ce que** plusieurs profilés de pression (22) séparés sont placés bout à bout les uns dans le prolongement des autres.

12. Vanne guillotine selon la revendication 11, **caractérisée en ce que** les profilés de pression (22) séparés sont disposés à une tension différente pour que la force appuyant sur la garniture tressée (17) soit différente à des endroits différents.

13. Vanne guillotine selon l'une quelconque des revendications 1 à 12, **caractérisée en ce que** la structure en plaques en acier à ressort (23) est soutenue de sorte que sa courbe soit supérieure à 90°.

14. Agencement de conduit, où une vanne guillotine est installée dans le conduit (15) pour former un composant de conduit pour fermer le conduit (15), **caractérisé en ce que** la vanne guillotine est une vanne guillotine selon l'une quelconque des revendications 1 à 13.
